# EUROPÄISCHE PATENTSCHRIFT

(11) **EP 0 838 743 B1**
(45) Veröffentlichungstag und Bekanntmachung des Hinweises auf die Patenterteilung: **14.07.1999**
(21) Anmeldenummer: 97116589.9
(22) Anmeldetag: 24.09.1997
(51) Int. Cl.: G05D 7/01, B67D 5/34

(54) **In eine Flüssigkeitsleitung oder die Aufnahmebohrung einer Armatur einsetzbarer Mengenregler**
Liquid flow rate controller for insertion in a pipe or in a connector
Régulateur de débit de liquide destiné à être inserré dans une conduite ou un raccord

(30) Priorität: 07.10.1996 DE 19641233
(43) Veröffentlichungstag der Anmeldung: 29.04.1998
(73) Patentinhaber: A. und K. Müller GmbH & Co. KG, 40595 Düsseldorf (DE)
(72) Erfinder: Moldenhauer, Hermann, 40625 Düsseldorf (DE)
(74) Vertreter: Feder, Wolf-Dietrich, Dr. Dipl.-Phys.

(56) Entgegenhaltungen:
- EP-A- 0 492 111
- WO-A-82/01573
- DE-U- 29 520 069

## Beschreibung

Die Erfindung betrifft einen in eine Flüssigkeitsleitung oder die Aufnahmebohrung einer Armatur einsetzbaren Mengenregler mit den Merkmalen aus dem Oberbegriff des Patentanspruchs 1.

Ein derartiger Mengenregler ist beispielsweise in dem Dokument WO 82/01573 A beschrieben. Die im Randbereich der Stirnfläche der Reglerscheibe angeordnete kegelflächenförmige Abflachung besitzt bei dieser bekannten Vorrichtung einen Neigungswinkel von 28° zur Scheibenmittelebene.

Derartige Mengenregler werden vorzugsweise in Armaturen und Geräte von Trinkwasserinstallationen eingebaut und sind an sich bekannt. Die Reglerscheibe aus elastisch verformbarem Material verengt bei Druckbeaufschlagung mit fluiden Medien die Durchlaßquerschnitte der Durchbrechungen, und zwar in der Weise, daß in einem bestimmten Differenzdruckbereich der Volumenstrom konstant bleibt.

Der sich ergebende Volumenstrom und seine Konstanz bei Druckänderungen ist weitgehend von den Materialeigenschaften, der Form und den Maßen der elastischen Reglerscheibe abhängig. Elastomere weisen bei diesen Kriterien große Toleranzen auf, so daß der angestrebte Volumenstrom nicht erzielt wird und seine Konstanz in weiten Differenzdruckbereichen nicht gegeben ist.

Insbesondere von der Formgebung der Scheibe ist die Anfangssteilheit der Kennlinie des Reglers abhängig, d.h. sie bestimmt bei welchem Mindestdifferenzdruck der Nominalwert des Reglers erreicht wird. Herkömmliche Regler weisen oft einen nicht erwünschten, flachen Anstieg der Kurve auf und erreichen somit den Nominalwert des Volumenstroms erst bei höheren Druckdifferenzen.

Außerdem ist oft zu beobachten, daß Mengenregler dynamisch relativ langsam auf Druckänderungen reagieren und bei wechselndem steigendem und fallendem Druck eine große Hysterese aufweisen. Überdies treten auch bleibende Verformungen an der Reglerscheibe auf, die im Laufe der Zeit die Kennlinie des Reglers verändern.

Der Erfindung liegt die Aufgabe zugrunde, einen Mengenregler mit den im Oberbegriff des Patentanspruchs 1 angegebenen Merkmalen so auszugestalten, daß bei großer Konstanz des Volumenstroms in weiten Differenzdruckbereichen eine hohe Anfangssteilheit der Kennlinie des Reglers eine geringe Hysterese bei wechselndem steigendem und fallendem Druck und eine hohe Stabilität der Kennlinie über die Betriebszeit erreicht werden.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Die besondere Ausgestaltung der Reglerscheibe mit einer kegelflächenförmigen Abflachung der zur Reglerfassung hinweisenden Seite sorgt für eine hohe Anfangssteilheit der Reglerkennlinie und die auf dieser Seite ausgebildeten schmalen Rippen und/oder sektorförmigen Stege tragen dazu bei, eine geringe Hysterese verbunden mit einem schnellen Reaktionsvermögen zu erzielen.

Unter einer "schmalen Rippe" im Sinne der Erfindung wird dabei eine Rippe verstanden, deren Breite nur einem Bruchteil des Scheibendurchmessers entspricht, während unter einem "sektorförmigen Steg" ein etwas breiterer Bereich verstanden werden soll, der sich sektorförmig über einen Umfangswinkel der Scheibe erstreckt, der größer als 90° werden kann. Dies wird weiter unten anhand der Ausführungsbeispiele näher erläutert.

Im folgenden werden anhand der beigefügten Zeichnungen Ausführungsbeispiele des erfindungsgemäßen Mengenreglers sowie seine Funktionsweise näher erläutert.

In den Zeichnungen zeigen:
- Fig. 1: einen Mengenregler im Längsschnitt;
- Fig. 2: die Vorderansicht des Reglers nach Fig. 1;
- Fig. 3: die Rückansicht des Reglers nach Fig. 1;
- Fig. 4: die Reglerscheibe des Reglers nach Fig. 1 bis 3 in Seitenansicht;
- Fig.4A: eine vergrößerte Darstellung der Reglerscheibe nach Fig. 4;
- Fig.5: die Rückseite einer ersten Ausführungsform der Reglerscheibe;
- Fig. 6: in einer Darstellung analog Fig. 5 die Rückseite einer anderen Ausführungsform der Reglerscheibe;
- Fig. 7: eine Kennlinie eines Mengenreglers gemäß dem Stand der Technik;
- Fig. 8: eine Kennlinie eines erfindungsgemäßen Mengenreglers.

Der in den Zeichnungen dargestellte Mengenregler besteht grundsätzlich aus drei Teilen, nämlich der Reglerfassung 1, der Reglerscheibe 2 und dem Diffusor 3. Die Reglerfassung 1 ist im dargestellten Ausführungsbeispiel ein im wesentlichen nach beiden Seiten topfartig ausgebildetes Bauteil mit einem Boden 1.1, einer nach vorne weisenden Seitenwand 1.2 und einer nach hinten weisenden Seitenwand 1.3. Die nach vorne weisende Seitenwand 1.2 öffnet sich kegelig nach außen und ist elastisch ausgebildet. Der Boden 1.1 weist Durchbrechungen 4 auf, die symmetrisch zur axialen Richtung angeordnet sind. Im dargestellten Ausführungsbeispiel sind es sechs Durchbrechungen 4. Weiterhin ist an der Vorderseite der Fassung 1 am Boden 1.1 mittig ein Fünfkantzapfen 5 mit einer konzentrischen Bohrung 6 angeordnet.

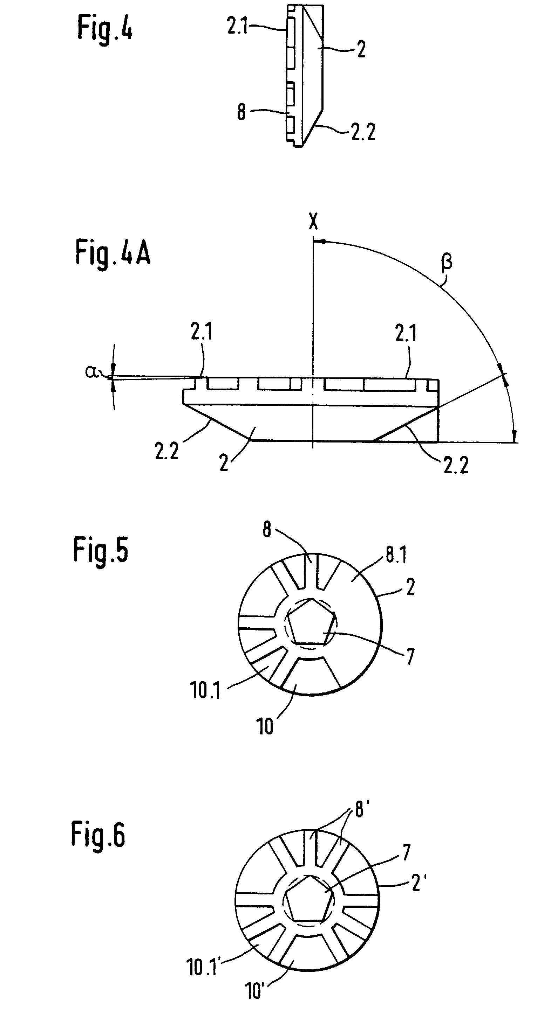

Die in die Fassung 1 eingesetzte Reglerscheibe 2 ist in einer ersten Ausführungsform in den Fig. 4, 4A und 5 dargestellt. Auf den Fünfkantzapfen 5 wird die Reglerscheibe 2 mittels eines entsprechend fünfkantigen Mittellochs 7 aufgesetzt.

Die Reglerscheibe 2 besteht aus elastisch verformbarem Material, beispielsweise einem Elastomer und besitzt an der Vorderseite, also der Anströmseite, eine stark kegelförmige Abschrägung 2.2, die einen vorgegebenen Winkel zur axialen Richtung X aufweist. Die damit erreichte Volumenreduzierung läßt die Reglerscheibe schon bei kleinen Druckänderungen reagieren. Auf der Rückseite der Reglerscheibe 2 befindet sich im Randbereich eine kleine Abschrägung mit einem vorgegebenen Winkel α, der 1° bis 5° betragen kann. Weiterhin befinden sich auf der Rückseite der Scheibe, wie aus Fig. 5 zu erkennen, schmale Rippen 8, die im wesentlichen radial verlaufen und in vorgegebenen Winkelabständen angeordnet sind und eine Breite besitzen, die nur einen kleinen Bruchteil des Umfangs bzw. des Scheibendurchmessers beträgt. Zwischen diesen schmalen Rippen befinden sich jeweils Vertiefungen 10. Weiterhin ist bei der Ausführungsform nach Fig. 5 über einen gewissen Umfangsbereich ein sektorförmiger Steg 8.1 mit einem vorgegebenen Umfangswinkel größer als 90° angeordnet. Im eingebauten Zustand der Reglerscheibe 2 legt sich die so gegliederte Rückseite zunehmend mit sich ausdehnenden Bereichen an den Topfboden 1.1 an und verschließt die Durchbrechungen 4. Je nach Anzahl und Abstand der Rippen 8 und der Ausbildung und Ausdehnung des Steges 8.1 ergibt sich der Nominalwert des Volumenstroms für den Regler. Die leichte Schrägung 2.1 auf der Rückseite der Reglerscheibe 2 unterstützt einen steilen Anstieg der Volumenstromkennlinie verbunden mit einer geringen Hysterese bei Druckschwankungen. Aufgrund der beschriebenen Formgebung der Reglerscheibe 2 ist für das Material ein weiter Spielraum für die Toleranz der Härte zulässig.

In Fig. 6 ist eine etwas andere Ausführungsform einer Reglerscheibe 2' dargestellt, bei der lediglich schmale radial verlaufende Rippen 8' in unterschiedlichen Winkelabständen mit Vertiefungen 10' bzw. 10.1' an der Rückseite angeordnet sind. Selbstverständlich sind auch andere Ausbildungen und Verteilungen von Rippen und Stegen möglich.

Durch die fünf möglichen definierten Stellungen der Reglerscheibe 2 in Beziehung zu den sechs Durchbrechungen 4 im Topfboden 1.1 der Reglerfassung 1 läßt sich der nominale Volumenstrom des Reglers verändern, ohne daß Teile ausgetauscht werden müssen.

Selbstverständlich kann anstelle eines fünfkantigen Zapfens 5 auch ein Vierkant treten und es können in diesem Falle beispielsweise fünf Durchbrechungen 4 im Topfboden 1.1 vorgesehen sein. Es sind dann vier zum unterschiedlichen Reglerverhalten führende Stellungen der Reglerscheibe 2 in der Fassung 1 möglich.

Allgemein gilt, daß in vorteilhafter Weise, wenn im Topfboden n symmetrisch zur axialen Richtung angeordnete Durchbrechungen vorhanden sind, der Mittelzapfen der Fassung einen n -1 eckigen Querschnitt besitzen soll, so daß bei entsprechender Ausbildung des Mittellochs der Reglerscheibe n -1 zu unterschiedlichem Reglerverhalten führende Positionen der Reglerscheibe möglich sind. n ist dabei eine natürliche Zahl größer 3 und zweckmäßigerweise kleiner 10.

An der Rückseite der Reglerfassung 1 ist ein Diffusor 3 vorgesehen, der in eine Ausdrehung der Reglerfassung 1 eingesetzt ist. Der Diffusor 3 ist ein rotationssymmetrisches Bauteil und weist gleichmäßig von seiner Mitte ausgehende Speichen 9 auf. Er dient der Strahlformung des den Regler durchströmenden Fluids. Der Diffusor 3 wirkt dabei zunächst als Strömungswiderstand für das aus der Reglerfassung austretende Medium. Die Speichen 9 sind so ausgebildet und angeordnet, daß zwischen dem stromabwärts liegenden und öffenenden Ende 6.1 der Bypaßbohrung und den Speichen ein vorgegebener Abstand besteht. Im Zwischenraum zwischen der Reglerfassung 2 und dem Diffusor 3 verteilt sich das Medium dann gleichmäßig und verläßt durch die Zwischenräume der Speiche 9 gerichtet den Regler.

Der erfindungsgemäße Mengenregler arbeitet wie folgt:

Der Mengenregler wird in passende Aufnahmebohrungen von Armaturen, Sicherungseinrichtungen, Strahlreglern oder Rohrstücken geschoben, wobei sich die trichterförmige Aufweitung der nach vorne gerichteten Außenwand 1.2 dichtend an die Wandung der Aufnahmebohrung anlegt.

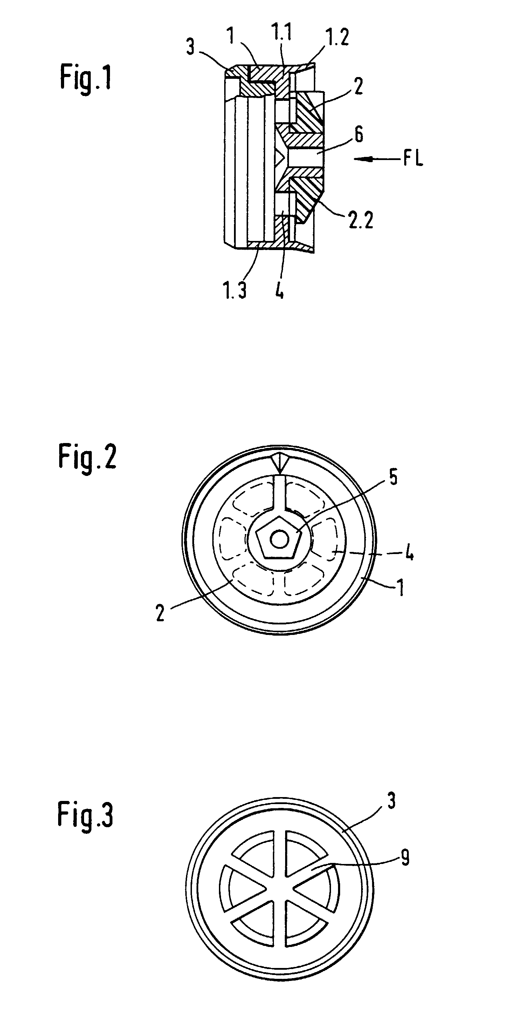

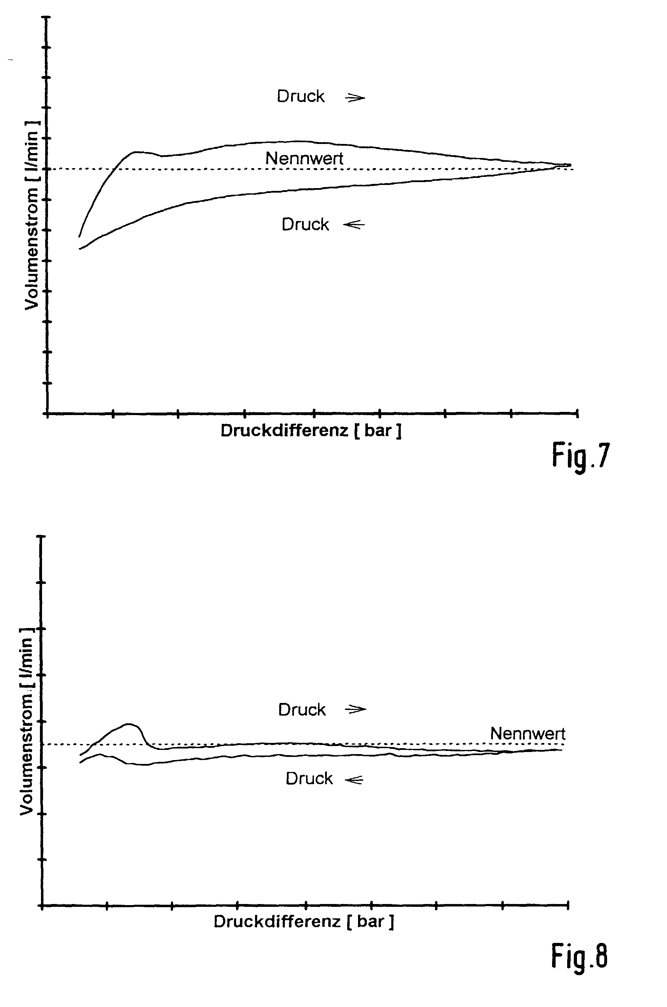

Der Fließdruck des strömenden Mediums, das in Richtung FL (Fig. 1) anströmt, beaufschlagt die Reglerscheibe 2 derart, daß sich die schmalen Rippen 8 bzw. der sektorförmige Steg 8.1 und die übrige Fläche der Rückseite der Reglerscheibe nach und nach an den Fassungsboden 1.1 anlegen. Dabei wird ein Teil der Durchlaßquerschnitte der Durchbrechungen 4 abgedeckt, so daß die freibleibenden Strömungskanäle und die Bypaßbohrung 6 der Fassung den Volumenstrom bestimmen.Bei weiter steigender Druckdifferenz werden auch die vertieften Flächen 10 zwischen den Rippen 8 der Scheibe 2 in die freien Querschnitte der Fassung gedrückt, so daß der Volumenstrom sich dabei derart mindert, daß eine gerade Kennlinie entsteht. Hierdurch wird erreicht, daß der Volumenstrom unabhängig von der Druckdifferenz konstant bleibt. Bei fallender Druckdifferenz gibt die Scheibe durch ihre elastischen Eigenschaften wieder mehr Durchlaßquerschnitt frei und gleicht so den Volumenstrom seinem Sollwert automatisch an. Die Strömung durchläuft dann den Diffusor 3 und verläßt den Regler als gleichmäßig geformter Strahl. In Fig. 7 ist eine Volumenstromkennlinie eines üblichen Reglers nach dem Stand der Technik dargestellt. Wie man sehen kann, besitzt dieser Regler eine sehr deutliche Hysterese, in dem beim ansteigenden Druck der Nennwert rasch überschritten wird und dann wieder abfällt, während beim abfallenden Druck der Nennwert sogleich unterschritten wird.

In Fig. 8 ist eine Volumenstromkennlinie für einen Mengenregler mit den oben beschriebenen Merkmalen dargestellt. Wie zu erkennen, wird der Nennwert bei steigendem und fallendem Druck deutlich besser eingehalten und es tritt nur eine ganz geringe Hysterese auf.

## Patentansprüche

1. In eine Flüssigkeitsleitung oder Aufnahmebohrung einer Armatur einsetzbarer Mengenregler mit einer im wesentlichen topfförmigen Fassung (1), deren Boden (1.1) Durchbrechungen (4) aufweist und in die eine Reglerscheibe (2) aus elastisch verformbarem Material eingesetzt ist, die an ihrer, dem Topfboden (1.1) zugewandten Stirnfläche mindestens in ihrem Randbereich eine kegelflächenförmige Abflachung (2.1) aufweist, dadurch gekennzeichnet, daß die kegelflächenförmige Abflachung (2.1) einen Neigungswinkel von 1° bis 5° zur Scheibenmittelebene besitzt und die Stirnfläche mit im wesentlichen radial in vorgegebenen Winkelabständen verlaufenden schmalen Rippen (8) und/oder sektorförmigen Stegen (8.1), die sich über einen vorgegebenen Umfangswinkel erstrecken, versehen ist.

2. Mengenregler nach Anspruch 1, dadurch gekennzeichnet, daß der Topfboden (1.1) n (n > 3) symmetrisch zur axialen Richtung angeordnete Durchbrechungen (4) und einen im Querschnitt höchstens n-1-eckigen Mittelzapfen (5) aufweist, auf den die Reglerscheibe (2) mit einem im Querschnitt entsprechend n-1-eckigen konzentrisch angeordneten Loch (7) aufgesteckt ist.

3. Mengenregler nach Anspruch 2, dadurch gekennzeichnet, daß bei sechs Durchbrechungen (4) im Topfboden (1.1) die Reglerscheibe (2) ein im Querschnitt fünf eckiges Mittelloch (7) besitzt und auf einen Fünfkantzapfen (5) des Topfbodens (1.1) aufgesteckt ist.

4. Mengenregler nach einem der Ansprüche 1 bis 3, dadurch gekennzeichnet, daß die vom Topfboden (1.1) abgewandte Anströmseite der Reglerscheibe (2) kegelstumpfförmig (2.2) ausgebildet ist.

5. Mengenregler nach einem der Ansprüche 1 bis 4, dadurch gekennzeichnet, daß die Fassung (1) eine konzentrische Bypaßbohrung (6) aufweist.

6. Mengenregler nach Anspruch 5, dadurch gekennzeichnet, daß die Fassung (2) mit einem Diffusor (3) verbunden ist, der als Scheibe mit mehreren, vom Mittelpunkt radial zum Scheibenrand verlaufenden Speichen (9) ausgebildet ist, wobei das stromabwärts gelegene Ende (6.1) der Bypaßbohrung (6) einen vorgegebenen Abstand von den Speichen (9) besitzt.

## Claims

1. Quantity regulator which can be inserted in a liquid line or the receiving bore of a fitting and has an essentially pot-shaped frame (1), the floor (1.1) of which has openings (4) and in which there is inserted a regulator disc (2) which is made of elastically deformable material and has, on its end face which faces towards the floor (1.1) of the pot, at least in the edge region of the said end face, a conical-surface-shaped flattened portion (2.1), characterised in that the conical-surface-shaped flattened portion (2.1) possesses-an angle of inclination of 1° to 5° in relation to the median plane of the disc and the end face is provided with narrow ribs (8), which run essentially radially at predetermined angular intervals, and/or with sector-shaped webs (8.1) which extend over a predetermined peripheral angle.

2. Quantity-regulator according to claim 1, characterised in that the floor (1.1) of the pot has n (n > 3) openings(4) disposed symmetrically in relation to the axial direction and a central journal (5), which has, in cross-section, at most n-1 corners and onto which the regulator disc (2) is slipped via a concentrically disposed hole (7) which has, in a manner corresponding in cross-section, n-1 corners.

3. Quantity-regulator according to claim 2, characterised in that, when there are six openings (4) in the floor (1.1) of the pot, the regulator disc (2) has a central hole (7) which is pentagonal in cross-section and is slipped onto a pentagonal journal (5) on the floor (1.1) of the pot.

4. Quantity-regulator according to one of claims 1 to 3, characterised in that that side of the regulator disc (2) against which the flow impinges and which faces away from the floor (1.1) of the pot is of truncated cone-shaped construction (2.2).

5. Quantity-regulator according to one of claims 1 to 4, characterised in that the frame (1) has a concentric by-pass bore (6).

6. Quantity-regulator according to claim 5, characterised in that the frame (2) is connected to a diffuser (3) which is constructed as a disc having a number of spokes (9) running radially from the central point to the edge of the disc, that end (6.1) of the by-pass bore (6) which is located downstream being at a predetermined interval from the spokes (9).

## Revendications

1. Régulateur de débit insérable dans une conduite de liquide ou dans l'alésage de réception d'un robinet, comportant une monture (1) sensiblement en forme de godet dont le fond (1.1) présente des perçages (4) et dans laquelle est inséré un disque de réglage (2) en une matière élastiquement déformable qui présente, sur sa face frontale orientée vers le fond de godet (1.1), au moins dans sa zone marginale, un replat cunéiforme (2.1), caractérisé en ce que ledit replat cunéiforme (2.1) présente un angle d'inclinaison de 1 à 5° par rapport au plan médian du disque et que la face frontale est munie de nervures (8) étroites s'étendant radialement avec des écarts angulaires prédéterminés, et/ou de traverses (8.1) en forme de secteur.

2. Régulateur de débit conforme à la revendication 1, caractérisé en ce que le fond du godet (1.1) présente n (n>3) perçages disposés symétriquement par rapport à la direction axiale et un ergot central (5) multi-angulaire de section maximale égale à n-1, sur lequel est enfiché le disque de réglage au moyen d'un trou (7) disposé de manière concentrique.

3. Régulateur de débit conforme à la revendication 2, caractérisé en ce que dans le cas de la présence de six perçages (4) au fond du godet (1.1) le disque (2) présente un trou central (7) de section pentagonale et est enfiché sur un ergot pentagonal (5) dudit fond (1.1).

4. Régulateur de débit conforme à l'une des revendications 1, à 3, caractérisé en ce que la face du disque (2) orientée vers l'arrivée du flux, opposée au fond du godet (1.1), présente une forme tronconique (2.2).

5. Régulateur de débit conforme à l'une des revendications 1 à 4, caractérisé en ce que la monture (2) présente un perçage concentrique (6) de dérivation.

6. Régulateur de débit conforme à la revendication 5, caractérisé en ce que la monture (2) est reliée à un diffuseur (3) ayant la forme d'un disque comportant plusieurs rayons (9) s'étendant radialement entre le centre et le bord dudit disque, l'extrémité (6.1) du perçage de dérivation (6), située en direction du départ du flux, étant disposée à une distance prédéterminée des rayons (9).
